(19) Europäisches Patentamt
European Patent Office
Office européen des brevets

(11) **EP 0 689 576 B1**

(12) **EUROPÄISCHE PATENTSCHRIFT**

(45) Veröffentlichungstag und Bekanntmachung des Hinweises auf die Patenterteilung:
**29.12.2004 Patentblatt 2004/53**

(21) Anmeldenummer: **94911134.8**

(22) Anmeldetag: **09.03.1994**

(51) Int Cl.[7]: **C10L 1/22**, C10L 10/00

(86) Internationale Anmeldenummer:
**PCT/EP1994/000722**

(87) Internationale Veröffentlichungsnummer:
**WO 1994/021754 (29.09.1994 Gazette 1994/22)**

(54) **ALS KRAFTSTOFFADDITIV GEEIGNETE MISCHUNGEN**

MIXTURES SUITABLE FOR USE AS FUEL ADDITIVES

MELANGES POUVANT ETRE UTILISES COMME ADDITIFS DE CARBURANTS

(84) Benannte Vertragsstaaten:
**AT BE CH DE DK ES FR GB GR IE IT LI LU NL PT SE**

(30) Priorität: **20.03.1993 DE 4309074**

(43) Veröffentlichungstag der Anmeldung:
**03.01.1996 Patentblatt 1996/01**

(73) Patentinhaber: **BASF AKTIENGESELLSCHAFT**
**67056 Ludwigshafen (DE)**

(72) Erfinder:
- **THOMAS, Juergen**
  **D-67136 Fussgoenheim (DE)**
- **SCHREYER, Peter**
  **D-69469 Weinheim (DE)**
- **OPPENLAENDER, Knut**
  **D-67061 Ludwigshafen (DE)**
- **GUENTHER, Wolfgang**
  **D-67582 Mettenheim (DE)**
- **FRANZ, Lothar**
  **D-67112 Mutterstadt (DE)**

(56) Entgegenhaltungen:
**EP-A- 0 244 616**
**EP-A- 0 310 875**
**EP-A- 0 356 725**
**EP-A- 0 440 248**
**EP-A- 0 460 957**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft als Additive für Kraftstoffe geeignete Mischungen aus im wesentlichen

A) mindestens einem Amin, Polyamin oder Alkanolamin, welche einen Polyisobutylrest als Kohlenwasserstoffrest mit einem mittleren Molekulargewicht von 500 bis 10000 tragen, hergestellt durch Hydroformylierung eines Polyolefins und Aminierung des so erhaltenen Aldehyd- und Alkoholgemisches unter hydrierenden Bedingungen, und

B) mindestens einem Polyetheramin der allgemeinen Formel I

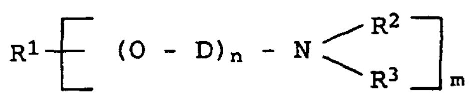

(I)

in der die Variablen folgende Bedeutung haben:

m 1 oder 2

n 1 bis 100

$R^1$ für den Fall, daß m für 1 steht, ein einwertiger $C_2$- bis $C_{35}$-Kohlenwasserstoffrest,
für den Fall, daß m für 2 steht, ein zweiwertiger $C_2$- bis $C_{30}$-Kohlenwasserstoffrest,

$R^2$, $R^3$ Wasserstoff, $C_1$- bis $C_{12}$-Alkyl, $C_5$- bis $C_7$-Cycloalkyl-, $C_6$- bis $C_{10}$-Aryl-, Polyalkylenaminrest oder Alkanolaminrest mit 1 bis 5 Stickstoffatomen; die Reste können gemeinsam mit dem Stickstoffatom, an das sie gebunden sind, einen fünf- oder sechsgliedrigen Ring bilden, in den noch weitere Heteroatome eingebaut sein können; die Reste können gleich oder verschieden sein,

D $C_2$- bis $C_5$-Alkylen

Weiterhin betrifft die Erfindung die Verwendung dieser Mischungen als Additive für Kraftstoffe für Ottomotoren.
Vergaser- und Einlaßsystem von Ottomotoren, aber auch Einspritzsysteme für die Kraftstoffdosierung in Otto- und Dieselmotoren werden in zunehmendem Maße durch Verunreinigungen belastet, die durch Staubteilchen aus der Luft, unverbrannte Kohlenwasserstoffreste aus dem Brennraum und die in den vergaser geleiteten Entlüftungsgase aus dem Kurbelwellengehäuse verursacht werden.
Die Rückstände adsorbieren Kraftstoff und verschieben das Luft-Kraftstoffverhältnis im Leerlauf und im unteren Teillastbereich, so daß das Gemisch fetter, die Verbrennung unvollständiger und wiederum die Anteile unverbrannter oder teilverbrannter Kohlenwasserstoffe im Abgas größer werden und der Benzinverbrauch steigt.
Es ist bekannt, daß durch Zusatz von Detergentien das Einlaßsystem von Ottomotoren sauber gehalten werden kann (siehe z.B. M. Rosenbeck in Katalysatoren, Tenside, Mineralöladditive, Herausgeben J. Falbe, U. Hasserodt, S. 223 f., Thieme Verlag, Stuttgart 1978 und Ullmann's Encyclopedea of Industrial Chemistry, Vol. A 16, 719 ff, 1990, VCH Verlagsgesellschaft). Emissionen und Kraftstoffverbrauch werden dadurch reduziert und das Fahrverhalten verbessert. Das molekulare Bauprinzip solcher Detergentien kann allgemein beschrieben werden als Verknüpfung polarer Strukturen mit meist höhermolekularen lipophilen Resten. Vertreter hierfür sind z.B. Produkte auf Basis von Polyisobuten mit Amingruppierungen als polare Gruppen, wie in der EP-A 244 616 beschrieben.
Eine weitere wichtige Additivkomponente für Kraftstoffe sind sogenannte Trägeröle. Bei diesen Trägerölen handelt es sich in der Regel um hochsiedende thermostabile Flüssigkeiten. Aus der EP-A 356 726 sind Ester aromatischer Polycarbonsäuren mit langkettigen Alkoholen als Trägeröle bekannt. Die US-A 5 112 364 lehrt Polyetheramine mit Alkylphenol- oder Alkylcyclohexylendgruppen als Zusätze zu Kraftstoffen, die insbesondere gute ventilreinigende Eigenschaften besitzen.
Die WO-A 91/03529 lehrt die Kombination von Detergentien, die bestimmte Aminogruppen tragen, mit Polyetheralkoholen als Trägeröle. Diese Kombination trage insbesondere weniger als ihre Einzelkomponenten zum Anstieg des Octanzahlbedarfes (ORI, Octane Requirement Increase) bei, der durch Ablagerungen des Kraftstoffs oder der Additive an Motorteilen herrührt. Ein neuer Motor erreicht erst nach erheblicher Laufzeit seinen endgültigen Octanzahlbedarf, der dann erheblich höher liegen kann als zu Beginn. Allgemein sollten Additive diesen Effekt zumindest nicht verstärken.
Ein erheblicher Nachteil der genannten Kombination von Additiven ist die unbefriedigende Mischbarkeit des

Detergenses mit dem Trägeröl. Es resultieren häufig trübe Mischungen, die den Kraftstoffen nicht zugesetzt werden können. In diesen Mischungen tritt nach längerer Lagerung häufig Phasentrennung auf. Die Verteilung des Detergenses in der Mischung ist somit inhomogen. In der Praxis sind aber solche Additiv-Pakete gefordert, die alle Komponenten in gelöster Form enthalten und die dem Kraftstoff in einem Verfahrensschritt zugesetzt werden können.

Es stellte sich daher die Aufgabe, eine Kombination aus einem Detergens und einer Trägerölkomponente bereitzustellen, die neben den Eigenschaften, in Kraftstoffen ventilreinigend zu wirken und den ORI-Wert gegenüber nicht additivierten Kraftstoffen nicht zu verschlechtern, weiterhin untereinander gut mischbar sind.

Demgemäß wurden die oben definierten Mischungen gefunden, die ein Detergens A und ein Polyetheramin B der Formel I enthalten. Weiterhin wurde die Verwendung dieser Mischungen als Additive für Kraftstoffe für Ottomotoren gefunden.

Komponente A

Die Komponente A ist in Kraftstoffen primär als Detergens wirksam. Als Komponente A kommen solche Amine, Polyamine oder Alkanolamine in Frage, die einen Polyisobutylrest als Kohlenwasserstoffrest mit einem mittleren Molekulargewicht von 500 bis 10000, vorzugsweise von 600 bis 2500 und besonders bevorzugt von 700 bis 1500 haben.

Für den Kohlenwasserstoffrest kommen sowohl Isobuten-Homopolymere in Betracht wie auch Isobuten-Copolymere, z.B. Polymere aus 70 bis 95 Mol-% Isobuten und 5 bis 30 Mol-% 1-Buten. Bedingt durch ihren Herstellungsprozeß bestehen diese Polyisobutene in der Regel aus einer Mischung von Verbindungen verschiedenen Molekulargewichts.

In an sich bekannter Weise können diese Polyisobutene nach Chlorierung mit Aminen umgesetzt werden. Bevorzugt wird aber eine Hydroformylierung des Polyisobutens und Aminierung des so erhaltenen Aldehyd- und Alkoholgemisches unter hydrierenden Bedingungen (siehe EP-A 244 616), da dieser Weg zu chlorfreien Produkten führt. Die Amingruppe des Detergenses A leitet sich von an sich bekannten Aminen wie Ammoniak, primären Aminen wie Methylamin, Ethylamin, Butylamin, Hexylamin, Octylamin, sekundären Aminen wie Dimethylamin, Diethylamin, Dibutylamin, Dioctylamin, Heterocyclen wie Piperazin, Pyrrolidin, Morpholin, die gegebenenfalls weitere inerte Substituenten tragen können, ab. Weiterhin sind als Ausgangsstoffe zur Herstellung der Detergentien A Polyamine wie Ethylendiamin, Propylendiamin, Diethylentriamin, Triethylentetramin, Hexamethylendiamin, Tetraethylenpentamin und Dimethylaminopropylamin zu nennen, sowie unterschiedliche Alkylengruppen tragende Polyamine wie Ethylenpropylentriamin. Die Alkanolamine tragen den Kohlenwasserstoffrest an einem Stickstoffatom. Es sind hier Alkanolmonoamine wie Ethanolamin sowie Alkanolpolyamine wie Aminoethylethanolamin zu nennen. Von diesen sind die Polyamine bevorzugt, darunter besonders Ethylendiamin, Diethylentriamin und Triethylentetramin. Ganz besonders bevorzugt ist aber Ammoniak.

Komponente B

Als Trägeröl enthält die erfindungsgemäße Mischung Polyetheramine der allgemeinen Formel I

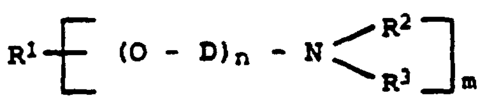

(I)

Im einzelnen haben die Variablen folgende Bedeutung:

m steht für 1 oder 2, vorzugsweise für 1.

n gibt die Zahl der wiederkehrenden Oxialkyleneinheiten an und beträgt 1 bis 100, vorzugsweise 5 bis 50, und insbesondere 7 bis 30.

$R^1$ steht für verschiedene Kohlenwasserstoffreste. Für den Fall, daß m für 1 steht, ist $R^1$ ein einwertiger $C_2$-$C_{35}$-Kohlenwasserstoffrest. Es kommen geradkettige aliphatische Reste wie n-Hexyl, n-Octyl, n-Nonyl, n-Decyl, n-Undecyl, n-Dodecyl und n-Tridecyl in Betracht, weiterhin verzweigte aliphatische Reste wie 2-Ethylhexyl, iso-Butyl und tert.-Butyl. Außerdem sind Arylreste wie Phenyl zu nennen sowie Alkyl-substituierte Phenylreste, darunter besonders $C_6$-$C_{16}$-substituierte Phenylreste wie Octylphenyl, Nonylphenyl, Dodecylphenyl. Die Alkylreste stehen bevorzugt in 2- und 4-Position des Phenylringes. Es können auch handelsübliche Mischungen der Stellungsisomeren verwendet werden. Weiter kommen Verbindungen in Betracht, die mehrfach alkylsubstituiert sind.

Für den Fall, daß m für 2 steht, ist $R^1$ ein zweiwertiger $C_2$-$C_{30}$-Kohlenwasserstoffrest wie Alkylen, z.B. Ethylen, Propylen, Butylen und Hexylen. Bevorzugt sind aber solche Reste, die sich von Polyphenolen wie Bisphenol A (2,2-Bis-(4-hydroxyphenyl)-propan), 1,1-Bis-(4-hydroxyphenyl)-ethan. 1,1-Bis-(4-hydroxyphenyl)-isobutan, 2,2-Bis-(4-hydroxy-3-tert.-butylphenyl)-propan und 1,5-Dihydroxy-naphthalin durch formale Abspaltung der Hydroxygruppen ableiten.

Die Reste $R^2$ und $R^3$ können gleich oder verschieden sein. Sie stehen für Wasserstoff, $C_1$-$C_{12}$-Alkyl wie Methyl, Ethyl, n-Propyl, Iso-Propyl, n-Butyl, Hexyl, Octyl, $C_5$-$C_7$-Cycloalkyl wie Cyclopentyl, Cyclohexyl, $C_6$-$C_{10}$-Aryl wie Phenyl, Polyalkylenaminreste mit 1 bis 5 Stickstoffatomen, die sich von Polyalkylenaminen wie Diethylenamin, Triethylendiamin, Tetraethylentriamin, Tetraethylenpentamin und Dimethylaminopropylamin ableiten. Als Alkanolamine kommen Alkanolmonoamine wie Ethanolamin und Alkanolpolyamine wie Aminoethylethanolamin in Betracht. Weiterhin können die Reste zusammen mit dem Stickstoffatom. an das sie gebunden sind, einen fünf- oder sechsgliedrigen Ring bilden wie Piperidin und Piperazin. Der Heterocyclus kann inerte Substituenten tragen wie in 2-Aminoethylpiperazin. Der Ring kann weitere Heteroatome wie Sauerstoff enthalten, wie in Morpholin.

Der Rest D steht für eine $C_2$-$C_5$-Alkylengruppe wie Ethylen, 1,2-Propylen und Butylen. Bevorzugt sind $C_3$- und $C_4$-Alkylengruppen. Im Falle, daß n größer als 1 ist, konnen die Reste D gleich oder verschieden sein. Die Einheiten -$(OD)_n$- können als Homopolymere oder als Blockcopolymere vorliegen. Am einfachsten sind jedoch solche Polymere erhaltlich, in denen die verschiedenen Reste statistisch verteilt sind.

Die Polyetheramine I sind an sich bekannt oder nach bekannten Methoden herstellbar (US-A 5 112 364).

Im allgemeinen wird dazu ein Alkohol $R^1$ - OH mit n-Äquivalenten eines Alkylenoxids in Gegenwart einer starken Base wie Kaliumtert.-Butylat bei erhöhter Temperatur unter Bildung eines Polyethers der Formel II

$$R^1\left[ (O - D)_n - OH \right]_m \qquad (II)$$

umgesetzt. Die Variablen haben die gleiche Bedeutung wie oben angegeben. Diese Polyether werden dann in einer weiteren Reaktionsstufe im allgemeinen ohne weitere Vorbehandlung einer Aminierung nach an sich bekannten Methoden unterworfen. Unter Aminierung wird dabei die Umsetzung des Polyethers mit Ammoniak oder einem primären Amin bzw. Polyamin verstanden, wobei die endständige Hydroxygruppe unter Wasserabspaltung durch eine Aminogruppe ersetzt wird (Houben-Weyl, Methoden der Organischen Chemie, Band 11/1, Kapitel IIb, S. 108-134, 4. Auflage, Thieme-Verlag, (1957)).

Die erfindungsgemäßen Mischungen bestehen im wesentlichen aus dem Detergens A und dem Polyetheramin I als Komponente B. Die Mischungen enthalten in der Regel 15 bis 95 Gew.-%, vorzugsweise 30 bis 80 Gew.-% der Komponente A sowie 5 bis 85 Gew.-%, vorzugsweise 20 bis 70 Gew.-% der Komponente B.

Daneben können die erfindungsgemäßen Mischungen weitere Komponenten C enthalten, wobei die Mengen an C 0 bis 40 Gew.-%, vorzugsweise 0 bis 10 Gew.-%, bezogen auf das Gesamtgewicht der Komponenten A und B, betragen. Diese Komponenten C beeinflussen die Eigenschaften der erfindungsgemäßen Mischungen im Hinblick auf ihre Verwendung in Kraftstoffen nur in geringem Ausmaß.

Die Komponente C umfaßt an sich bekannte Additive für Mischungen, die Kraftstoffen zugesetzt werden. Darunter sind Korrosionsinhibitoren, Demulgatoren, Detergentien oder Dispergatoren wie Amide und Imide des Polyisobutylbernsteinsäureanhydrids sowie weiterhin Trägeröle wie Ester von Carbonsäuren oder Polycarbonsäuren und Alkanolen oder Polyolen (s. DE-A 38 38 918) zu verstehen.

Die Erfindung betrifft weiterhin die Verwendung der erfindungsgemäßen Mischungen als Additive für Kraftstoffe für Ottomotoren.

Als Kraftstoffe kommen verbleites und unverbleites Normal- und Superbenzin in Betracht. Die Benzine können auch andere Komponenten als Kohlenwasserstoffe, z.B. Alkohole wie Methanol, Ethanol, tert.-Butanol sowie Ether wie Methyl-tert.-butylether enthalten.

Die Kraftstoffe enthalten die Komponenten A und B im allgemeinen in Mengen von jeweils 10 bis 5000 ppm bezogen auf die Gesamtmasse, vorzugsweise 50 bis 1000 ppm. Die Kraftstoffe können neben den oben beschriebenen Komponenten C außerdem noch Antioxidantien, z.B. N,N'-Di-sec.-butyl-para-phenylendiamin und Stabilisatoren, z.B. N,N'-Disalicyliden-1,2-diaminopropan enthalten.

Die Komponenten A und B lassen sich zu klaren, homogenen Lösungen vermischen. Damit additivierte Kraftstoffe zeigen gegenüber den reinen Kraftstoffen deutlich geringere Ventilablagerungen.

Weiterhin tragen die Additive nicht zu einem Anstieg des Octanzahlbedarfes ORI bei.

Beispiele

Herstellungsbeispiele

Beispiel 1

Herstellung eines Polyethers II, wobei m für 1, n für 24, $R^1$ für Nonylphenyl und D für 1,2-Propylen steht

740 g (3,36 Mol) Nonylphenol und 55 g Kalium-tert.-Butylat wurden bei 130°C unter Rühren mit 4,68 kg (80,6 Mol) Propylenoxid bei 4 bar umgesetzt. Nach 3,5 Stunden wurde auf das Produkt aufgearbeitet. Man erhielt 5,40 kg des Polyethers.

Beispiel 2

Herstellung eines Polyetheramins I, wobei die Variablen die in Beispiel 1 angegebene Bedeutung haben und weiterhin die Reste $R^2$ und $R^3$ jeweils für Wasserstoff stehen

362 g (0,3 Mol) des Polyethers gemäß Beispiel 1 wurden mit 500 ml Ammoniak sowie 50 g Raney-Nickel bei 225°C und einem Wasserstoffdruck von 280 bar 4 Stunden lang erhitzt. Der Austrag betrug 330 g, der Aminierungsgrad lag bei 96 % (Gesamtaminzahl 44,6 mg KOH/g).

Als Komponente A diente in den folgenden Versuchen ein Polyisobutylamin PIBA mit einem durchschnittlichen Molekulargewicht von 1000 (hergestellt wie in EP-A 244 616 beschrieben).

Anwendungsbeispiele

Mischversuche

Der im Beispiel 1 und 2 hergestellte Polyether bzw. aminierte Polyether wird im Gewichtsverhältnis 1:1, 2:1 und 1:2 mit PIBA gemischt und die Homogenität der Lösung visuell bewertet.

| Mischungsverhältnis | 2:1 | 1:1 | 1:2 |
|---|---|---|---|
| PIBA + Polyether | stark trübe Lösung | 2 Phasen | 2 Phasen |
| PIBA + aminierter Polyether | klare, homogene Lösung | klare, homogene Lösung | klare, homogene Lösung |

Motorentest

- Bestimmung von ventilablagerungen im Opel Kadett nach CEC-F-02-T-79
  Bei den Motorentests wurden Kombinationen von PIBA mit dem Polyether nach Beispiel 1 bzw. mit dem aminierten Polyether nach Beispiel 2 auf ihre Wirksamkeit zur Reinhaltung der Einlaßventile geprüft. Kraftstoff: Eurosuper bleifrei

| Produkt | Additivmenge (mg/kg) | durchschnittliche Ventilablagerungen in mg |
|---|---|---|
| Grundwert (ohne Additiv) | - | 386 |
| PIBA +<br>Polyether nach Beispiel 1 | 200<br>200 | 81 |
| PIBA +<br>aminierter Polyether nach Beispiel 2 | 200<br>200 | 0 |

Zu erkennen ist die deutlich höhere Wirksamkeit der erfindungsgemäßen Kombination von PIBA mit dem

aminierten Polyether gegenüber der Kombination von PIBA mit dem Polyether gemäß Beispiel 1.

Bestimmung des Octanzahlbedarfes ORI

Allgemeine Meßmethode:

Der Anstieg des Octanzahlbedarfes wird in 400 Stunden Langzeittests in einem Mercedes-Benz M 102 E-Motor gemessen. Der Zylinderkopf ist bei dem verwendeten Motor mit vier Druckaufnehmern ausgerüstet. Diese Aufnehmer sind so installiert, daß die Druckmembranen praktisch ohne Schußkanal in der Wandung des Brennraumes angebracht sind. Es ist so möglich, den Druck im Brennraum ohne verfälschende Pfeifenschwingungen aufzunehmen.

Mit der zur Auswertung angeschlossenen Indiziereinrichtung, bestehend aus 4 Quarzaufnehmern und einer handelsüblichen Indiziereinrichtung (AVL-Indiskop), können in dem interessierenden Bereich 30°KW (Kurbelwinkel) vor OT (oberer Totpunkt) bis 30°KW nach OT bei jeder Verbrennung die Druckverläufe verfolgt werden. Ein eingebauter Rechner gestattet die Auswertung des Verbrennungsablaufes. Dabei können die Drucksignale der einzelnen Zylinder gemittelt und in verschiedenen Rechenoperationen ausgewertet werden. Die Anwendung des Heizgeseczes hat sich als vorteilhaft erwiesen, um Klopfen im Grenzbereich zu messen.

Diese Funktion dient zur schnellen Berechnung des Heizverlaufes (= Wärmefreisetzung pro °KW), des integrierten Heizverlaufes (aufsummierte Wärmefreisetzung) sowie des Verlaufes der mittleren Gastemperatur. Es handelt sich dabei um einen vereinfachten Algorithmus, der aus dem Brennraumdruckverlauf die dem Gas wirksam zugeführte Energie berechnet. Die bei der Verbrennung tatsächlich freigesetzte Wärme ist um die Energieverluste der Wandverluste (ca. 20 %) höher.

Die Wärmefreisetzung im betrachteten Intervall wird aus dem Unterschied zwischen dem tatsächlichen Druck am Intervallende sowie dem sich bei reiner adiabatischer Kompression/Expansion im Intervall ergebenden Druckwert berechnet.

$$Q_{1-2}=m \cdot c_v (T_2 - T_2')$$

$$T_2 = \frac{P_2 \cdot V_2}{m \cdot R}$$

$$T_{2'} = \frac{P_{2'} \cdot V_{2'}}{m \cdot R}$$

$$P_{2'} = P_{1'} \left( \frac{V_1}{V_2} \right)^n$$

P = tatsächlicher Druck
P' = Druck bei adiabatischer Kompression/Expansion
m = Masse des Kr-Luft-Gemisches
$c_v$ = spezifische Wärme
v = konst.
R = Gaskonstante
n = Polytropenexponent

$$Q_{1-2} = \frac{c_v}{R} \cdot V_2 \left( P_2 - P_1 \left( \frac{V_1}{V_2} \right)^n \right)$$

Für $c_v$ und n werden Nährungswerte verwendet.
$c_v$ = 0, 7+T 0,001·(0.155+A), A = 0,1 für Ottomotoren

$$n = 1 + \frac{0,2888}{c_v}$$

Die so errechneten Werte für den Energieumsatz in

$$\frac{KJ}{kg \cdot {}^\circ KW}$$

oder

$$\frac{KJ}{m^3 \cdot {}^\circ KW}$$

zeigen Störungen im Energieumsatz durch klopfende Verbrennung sehr deutlich auf.

Es gelingt so, die Kopfschwelle bei minimalem Klopfen gut zu erkennen. Durch vorhandene Kraftstoffe mit bekannten Octanzahlen kann so der Octanzahlbedarf des Motors unter bestimmten Lastbedingungen gut und reproduzierbar ermittelt werden. Kraftstoff: Eurosuper bleifrei

| Produkt | Additivmenge (mg/kg) | Anstieg des Octanzahlbedarfes (Δ OZ) |
|---|---|---|
| Grundwert (ohne Additiv) | - | 3,1 |
| PIBA +<br>Polyether nach Beispiel 1 | 200<br>200 | 4,3 |
| PIBA +<br>aminierter Polyether nach Beispiel 2 | 200<br>200 | 2.9 |

Während die Kombination von PIBA mit Polyether zu einem Anstieg von 4,3 Octanzahlen führt und somit um mehr als 1 Octanzahl über dem Wert für den nicht additivierten Kraftstoff liegt, wurde für die Kombination aus PIBA mit dem aminierten Polyether ein Anstieg des Octanzahlbedarfes von nur 2,9 gemessen.

## Patentansprüche

1. Als Kraftstoffadditiv geeignete Mischung aus im wesentlichen

   A) mindestens einem Amin, Polyamin oder Alkanolamin, welche einen Polyisobutylrest als Kohlenwasserstoffrest mit einem mittleren Molekulargewicht von 500 bis 10000 tragen, hergestellt durch Hydroformylierung eines Polyolefins und Aminierung des so erhaltenen Aldehyd- und Alkoholgemisches unter hydrierenden Bedingungen,
   und

   B) mindestens einem Polyetheramin der allgemeinen Formel I

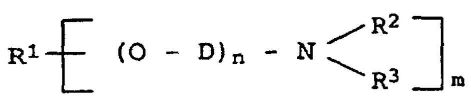

(I)

in der die Variablen folgende Bedeutung haben:

m 1 oder 2

n 1 bis 100

$R^1$ für den Fall, daß m für 1 steht, ein einwertiger $C_2$- bis $C_{35}$-Kohlenwasserstoffrest,

für den Fall, daß m für 2 steht, ein zweiwertiger $C_2$- bis $C_{30}$-Kohlenwasserstoffrest,

$R^2$, $R^3$ Wasserstoff, $C_1$- bis $C_{12}$-Alkyl, $C_5$- bis $C_7$-Cycloalkyl-, $C_6$- bis $C_{10}$-Aryl-, Polyalkylenaminrest oder Alkanolaminrest mit 1 bis 5 Stickstoffatomen; die Reste können gemeinsam mit dem Stickstoffatom, an das sie gebunden sind, einen fünf- oder sechsgliedrigen Ring bilden, in dem noch weitere Heteroatome vorhanden sein können; die Reste können gleich oder verschieden sein,

D $C_2$-$C_5$-Alkylen.

**2.** Mischungen nach Anspruch 1, **dadurch gekennzeichnet, daß** der Polyisobutylrest der Komponente A ein mittleres Molekulargewicht von 700 bis 1500 hat.

**3.** Mischungen nach Anspruch 1 oder 2, **dadurch gekennzeichnet, daß** der Rest $R^1$ der Komponente B für den Fall, daß m für 1 steht, ein Phenylrest oder $C_1$-$C_{20}$-Alkyl-substituierter Phenylrest ist.

**4.** Mischungen nach den Ansprüchen 1 bis 3, **dadurch gekennzeichnet, daß** der Rest D der Komponente B für Propylen oder Butylen steht.

**5.** Verwendung der Mischungen gemäß den Ansprüchen 1 bis 4 als Additive für Kraftstoffe für Ottomotoren.

## Claims

**1.** A mixture suitable as a fuel additive and comprising essentially

A) at least one amine, polyamine or alkanolamine, each of which carries a polyisobutyl radical as a hydrocarbon radical having an average molecular weight of from 500 to 10,000, prepared by hydroformylation of a polyolefin and amination of the resulting aldehyde and alcohol mixture under hydrogenating conditions, and
B) at least one polyetheramine of the formula I

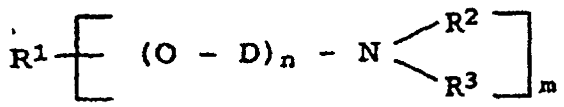

(I)

where
m is 1 or 2
n is from 1 to 100,
$R^1$ is a monovalent $C_2$-$C_{35}$-hydrocarbon radical when m is 1 and
a divalent $C_2$-$C_{30}$-hydrocarbon radical when m is 2, and
$R^2$ and $R^3$ are each hydrogen, $C_1$-$C_{12}$-alkyl, $C_5$-$C_7$-cycloalkyl, $C_6$-$C_{10}$-aryl, a polyalkyleneamine radical or alkanolamine radical having from 1 to 5 nitrogen atoms, where the radicals may be identical or different and, together with the nitrogen atom to which they are bonded, may form a five-membered or six-membered ring in which further hetero atoms may be incorporated, and
D is $C_2$-$C_5$-alkylene.

**2.** A mixture as claimed in claim 1, wherein the hydrocarbon radical of the component A has an average molecular weight of from 700 to 1,500.

**3.** A mixture as claimed in claim 1 or 2, wherein, when m is 1, the radical $R^1$ of component B is phenyl or $C_1$-$C_{20}$-alkyl-substituted phenyl.

**4.** A mixture as claimed in any of claims 1 to 3, wherein the radical D of component B is propylene or butylene.

**5.** Use of a mixture as claimed in any of claims 1 to 4 as an additive for fuels for gasoline engines.

## Revendications

**1.** Mélange approprié comme additif de carburant consistant pour l'essentiel en :

A) au moins une amine, polyamine ou alcanolamine, lesquelles portent un radical polyisobutyle comme radical hydrocarboné avec un poids moléculaire moyen de 500 à 10000, préparé par hydroformylation d'une polyoléfine et amination du mélange d'aldéhyde et d'alcool ainsi obtenu dans des conditions hydrogénantes.
B) au moins une polyétheramine de formule générale I :

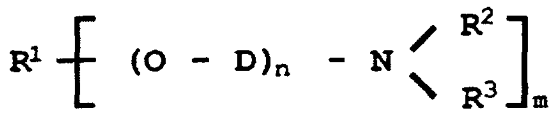

(I)

dans laquelle les variables ont la signification suivante :

m 1 ou 2
n 1 à 100
$R^1$ dans le cas où m désigne 1, un radical hydrocarboné en $C_2$ à $C_{35}$ monovalent,

dans le cas où m désigne 2, un radical hydrocarboné en $C_2$ à $C_{30}$ bivalent

$R^2$, $R^3$ désignent l'hydrogène, un groupe alkyle en $C_1$ à $C_{12}$, un groupe cycloalkyle en $C_5$ à $C_7$, un groupe aryle en $C_6$ à $C_{10}$, un radical polyalkylènamine ou un radical alcanolamine ayant 1 à 5 atomes d'azote ; les radicaux peuvent former en commun avec l'atome d'azote auquel ils sont reliés un cycle pentagonal ou hexagonal, dans lequel peuvent encore être présents d'autres hétéroatomes ; les radicaux peuvent être identiques ou différents.
D un groupe alkylène en $C_2$ à $C_5$.

**2.** Mélanges selon la revendication 1, **caractérisés en ce que** le radical polyisobutyle du composant A a un poids moléculaire moyen de 700 à 1500.

**3.** Mélanges selon les revendications 1 ou 2, **caractérisés en ce que** le radical $R^1$ du composant B, dans le cas où m désigne 1, est un radical phényle ou un radical phényle substitué par un groupe alkyle en $C_1$ à $C_{20}$.

**4.** Mélanges selon les revendications 1 à 3, **caractérisés en ce que** le radical D du composant B désigne le propylène ou le butylène.

**5.** Utilisation des mélanges selon les revendications 1 à 4 comme additifs pour carburants de moteurs à explosion.